# NEUE EUROPÄISCHE PATENTSCHRIFT

(11) **EP 2 613 097 B2**
(45) Veröffentlichungstag und Bekanntmachung des Hinweises auf die Entscheidung über den Einspruch: **18.11.2020**
(45) Hinweis auf die Patenterteilung: 28.12.2016
(21) Anmeldenummer: 12150495.5
(22) Anmeldetag: 09.01.2012
(51) Int. Cl.: F24D 3/08, F24D 19/10

(54) **Heizgerät**
Heating device
Appareil de chauffage

(43) Veröffentlichungstag der Anmeldung: 10.07.2013
(73) Patentinhaber: Grundfos Holding A/S, 8850 Bjerringbro (DK)
(72) Erfinder: Olesen, Thomas Young, 8000 Aaehus C. (DK)
(74) Vertreter: Patentanwälte Vollmann Hemmer Lindfeld Partnerschaft mbB

(56) Entgegenhaltungen:
- EP-A1- 1 418 387
- EP-A1- 1 528 371
- EP-A1- 2 413 047
- EP-A2- 0 987 499
- EP-A2- 1 126 178
- EP-A2- 2 065 653
- EP-B1- 0 866 280
- CN-Y- 2 727 638
- DE-A1- 4 117 516
- DE-A1- 4 236 967
- DE-A1- 4 332 141
- DE-A1- 4 332 141
- DE-A1- 19 809 123
- DE-C1- 10 021 216
- DE-U1- 9 409 782
- DE-U1-202008 006 790
- FR-A6- 2 211 109
- GB-A- 2 213 242
- GB-A- 2 314 914
- GB-A- 2 314 914
- KR-U- 20090 000 678
- TR-A2- 200 708 018
- US-A- 1 992 251
- US-A- 3 426 971
- US-A- 3 490 693
- US-A- 3 815 813
- US-A- 5 687 908

## Beschreibung

Die Erfindung betrifft ein Heizungsgerät, insbesondere eine Gastherme mit dem im Oberbegriff des Anspruchs 1 angegebenen Merkmal.

Derartige Heizgeräte zählen zum Stand der Technik und werden typischerweise eingesetzt, um einerseits die für die Raumheizung erforderliche Wärme und andererseits die für die Warmwasserbereitung erforderliche Wärme zur Verfügung zu stellen. In einem Primärwärmetauscher wird Wasser, typischerweise durch einen Verbrennungsprozess oder aber auch durch geeignete anderer Wärmequellen erhitzt, um dann entweder einen Heizkreis für die Raumheizung oder einen Heizkreis für die Warmwasserbereitung zu speisen. Es handelt sich dabei um Kreislaufsysteme, die mittels eines Umschaltventils angesteuert werden. Im normalen Betrieb ist der Heizkreis für die Raumheizung mit dem Primärwärmetauscher kreislaufverbunden. Wenn die Brauchwassererwärmung erforderlich ist, was beispielsweise durch Öffnen eines Entnahmeventils ausgelöst wird, wird das Umschaltventil umgesteuert, sodass der Sekundärwärmetauscher für die Brauchwassererwärmung mit dem Primärwärmetauscher kreislaufverbunden ist.

Aus Sicherheitsgründen ist dafür Sorge zu tragen, dass der Primärwärmetauscher stets in einen offenen Kreislauf eingebunden ist, um dort anfallende Wärme abführen zu können und ein Überhitzen insbesondere ein Verdampfen des dort befindlichen Wassers zuverlässig zu vermeiden. Grundsätzlich ist ein solcher Kreislauf stets durch den Heizkreis durch die Raumheizung gebildet, allerdings kann dieser, beispielsweise bei Verschluss der Thermostatventile an den Heizkörpern auch zeitweise unterbrochen sein. Für diesen Fall ist eine Bypassleitung vorgesehen, mit der sichergestellt werden kann, dass der Primärwärmetauscher stets in einen durchgängigen Kreislauf eingebunden ist.

Es zählt beispielsweise aus DE 43 32 141 A1 zum Stand der Technik, zu diesem Zweck eine parallel zu den Heizkreisen angeordnete Bypassleitung vorzusehen, welche Vor- und Rücklauf des Primärwärmetauschers miteinander verbindet und über ein typischerweise druckgesteuertes Ventil aktivierbar bzw. deaktivierbar ist. Wenn also durch weitere Wärmezufuhr am Primärwärmetauscher der Druck innerhalb der Vorlaufleitung ansteigt, wird bei Überschreiten eines vorbestimmten Drucks das Bypassventil geöffnet und somit die Bypassleitung, welche Vor- und Rücklauf hydraulisch miteinander verbindet, freigegeben.

Aus GB 2 314 914 A zählt es bereits zum Stand der Technik, den Sekundärwärmetauscher für die Brauchwasserwärmung als Teil des Bypasses in Verbindung mit einem Bypassventil zu nutzen.

Um die Baukosten, Wartungskosten und Baugröße eines Heizgerätes möglichst gering zu halten, ist man stets bemüht, die Anzahl der Leitungsverbindungen und Ventile so gering wie möglich zu halten, ohne jedoch die Funktionalität des Geräts zu beeinträchtigen. Vor diesem Hintergrund liegt der Erfindung die Aufgabe zugrunde, ein gattungsgemäßes Heizgerät zu verbessern.

Diese Aufgabe wird gemäß der Erfindung durch ein Heizgerät mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Das erfindungsgemäße Heizgerät weist mindestens zwei Heizkreise auf, einen für die Raumheizung und einen für die Brauchwassererwärmung.

Es weist einen Primärwärmetauscher auf, ist mit einer Umwälzpumpe und mit einem Umschaltventil ausgestattet, welches den Primärwärmetauscher hydraulisch in den ersten oder zweiten Heizkreis eingliedert. Gemäß der Erfindung ist der Heizkreis für die Brauchwassererwärmung beim Betrieb des Heizkreises für die Raumheizung als Bypassleitung für den Primärwärmetauscher vorgesehen, wobei das Umschaltventil als Bypassventil genutzt wird. Die Erfindung ist insbesondere für ein Heizgerät, das als Gastherme ausgebildet ist, prädestiniert, d. h. für wandhängend oder stehend betriebene Geräte, deren Primärwärmetauscher gasbeheizt ist. Grundsätzlich kann die Erfindung jedoch bei Heizgeräten anderer Bauart, beispielsweise mit Ölbrenner oder mit Fernwärme beheizt eingesetzt werden.

Grundgedanke der vorliegenden Erfindung ist es, die bei Heizgeräten nach dem Stand der Technik typischerweise vorgesehene gesonderte Bypassleitung durch eine ohnehin vorhandene Leitung zu ersetzen und das beim Stand der Technik typischerweise vorhandene Bypassventil durch das ohnehin vorhandene Umschaltventil zu ersetzen.

Die erfindungsgemäße Ausbildung hat eine deutliche Vereinfachung des Heizgerätes im Aufbau zur Folge, da die sonst erforderliche zusätzliche Bypassleitung entfällt und das Umschaltventil selbst als Bypassventil durch entsprechende Ansteuerungsmittel genutzt wird. Eine solche Anordnung ist insbesondere bei Heizgeräten von Vorteil, welche auf eine Einzelverrohrung weitgehend verzichten sondern aus Kunststoffspritzgussteilen aufgebaut sind, welche die wesentlichen Leitungsverbindungen bilden, die die zum Betrieb der Heizung erforderlichen Ventile, Pumpe und Sensoren aufnehmen und ein- oder mehrstückig ausgebildet sind.

Für die erfindungsgemäße Lösung spielt es grundsätzlich keine Rolle, ob das Umschaltventil im Vorlauf oder im Rücklauf des Primärwärmetauschers angeordnet ist, entsprechendes gilt für die regelmäßig vorhandene Umwälzpumpe.

Wenn das Umschaltventil auch als Bypassventil genutzt wird, dann ist das sonst übliche Bypassventil nicht mehr erforderlich. Um jedoch sicherzustellen, dass das Umschaltventil als Bypassventil genutzt werden kann, sind entsprechend steuerungstechnische Funktionen vorzusehen. Hierzu ist gemäß der Erfindung vorgesehen, dass Mittel zum Erfassen der Notwendigkeit einer Bypassfunktion vorzugsweise im Bereich des Primärwärmetauschers vorgesehen sind und dass weiter eine Steuerung vorgesehen ist, welche bei Erfassen der Notwendigkeit der Bypassfunktion das Umschaltventil zur Leitungsverbindung mit dem Heizkreis für die Brauchwassererwärmung ansteuert. Sowohl die Mittel zum Erfassen der Notwendigkeit einer Bypassfunktion als auch die Steuerung können vorteilhaft durch ohnehin vorhandene Bauteile gebildet sein. So sind typischerweise Temperatur- und/oder Drucksensoren vorhanden, die hierfür genutzt werden können. Die insoweit erforderliche Steuerung kann vorteilhaft in die ohnehin zum Umschalten des Ventils erforderliche Steuerung integriert sein, sodass die erfindungsgemäße Lösung ohne zusätzliche Bauteile, zumindest mit geringem technischen Aufwand realisierbar ist.

Besonders vorteilhaft ist es, wenn die Mittel zum Erfassen der Notwendigkeit einer Bypassfunktion einen Temperatursensor aufweisen, der vorzugsweise im Bereich des Primärwärmetauschers angeordnet ist und somit einen unzulässig hohen Temperaturanstieg in diesem Bereich rechtzeitig erfassen kann. Ein Temperatursensor ist kostengünstig, langzeitstabil und unproblematisch anzuordnen.

Alternativ oder zusätzlich können die Mittel zum Erfassen der Notwendigkeit einer Bypassfunktion einen Durchflussmesser aufweisen. Der Durchflussmesser hat den Vorteil, dass er frühzeitig, also noch vor einer ungewünscht hohen Temperatur im Bereich des Primärwärmetauschers ermitteln kann, ob der Heizkreis für die Raumheizung durchgängig ist oder nicht. Nur wenn dieser nicht durchgängig ist, muss die Bypassfunktion aktiviert werden.

Alternativ oder zusätzlich können gemäß einer Weiterbildung der Erfindung die Mittel zum Erfassen der Notwendigkeit einer Bypassfunktion einen Drucksensor aufweisen. Mit diesem Drucksensor kann ein Druckanstieg im Bereich der Vorlaufleitung zum Heizkreis für die Raumheizung ermittelt und somit die Bypassfunktion entsprechend aktiviert werden. Drucksensoren sind in Heizgeräten der vorgenannten Art typischerweise verbaut, sodass bei geeigneter Anordnung ein ohnehin vorhandenes Bauteil genutzt werden kann. Drucksensoren sind darüber hinaus kostengünstig in der Herstellung und langzeitstabil in der Anwendung.

Andererseits kann gemäß einer vorteilhaften Ausbildung des erfindungsgemäßen Heizgerätes das Umschaltventil zur Betätigung in zwei Moden ausgebildet sein, und zwar einem ersten Modus zum schnellen Öffnung und einem zweiten Modus zum langsamen schließen. Gegebenenfalls kann ein weiterer Modus zum langsamen Öffnen vorgesehen sein, wobei der Modus zum Schnellen Öffnen in jedem Fall zur Erzielung der Bypassfunktion genutzt wird. Solche unterschiedlichen Modi können vorteilhaft steuerungstechnisch also in der Regel ohne bauteiltechnische Veränderung durchgeführt werden.

Gemäß einer Weiterbildung der Erfindung ist vorteilhaft vorgesehen, das Umschaltventil zur Erzeugung eines Strömungswiderstandes modulierend anzusteuern. Auch eine solche Ansteuerung ist typischerweise ohne konstruktive Änderungen am Umschaltventil möglich und lediglich durch eine softwaremäßige Implementierung im Steuergerät erzielbar, was von Vorteil ist.

Wenn das Umschaltventil, was gemäß der Erfindung vorgesehen sein kann, im Vorlauf zu den Heizkreisen angeordnet ist, dann ist dieses hydraulisch praktisch unmittelbar dem Primärwärmetauscher nachgeordnet. Wenn, was gemäß der Erfindung auch vorgesehen sein kann, das Umschaltventil im Rücklauf zu den Heizkreisen angeordnet ist, so sind die Heizkreise vorlaufseitig stets offen und miteinander und mit dem Rücklauf des Primärwärmetauschers verbunden.

Eine besonders kompakte Bauweise ergibt sich, wenn das Umschaltventil um Pumpengehäuse integriert ist.

Gemäß der Erfindung ist die Steuerung für das Umschaltventil im Klemmenkasten des Motors der Umwälzpumpe angeordnet, insbesondere im Bereich der Steuerung eines elektronischen Drehzahlstellers für den Motor vorgesehen oder in diesen integriert. Bei modernen drehzahlgeregelten Umwälzpumpen ist die Steuerung für den Drehzahlsteller bzw.- regler in einem digitalen Mikroprozessor integriert, der meist in seiner Kapazität nur teilweise genutzt wird, sodass die für die Steuerung des Umschaltventils erforderlichen Funktionen hier vorteilhaft noch integriert werden können. Gegebenenfalls kann hier auch mit wenigen konstruktiven Änderungen eine gesonderte Steuerung in Form eines digitalen Prozessors vorgesehen sein.

Gemäß der Erfindung wird also die im Heizgerät ohnehin vorhandene Leitung des Heizkreises für die Brauchwassererwärmung als Bypassleitung für den Primärwärmetauscher beim Betrieb des Heizkreises für die Raumheizung benutzt. Die Leitung besteht dabei aus den entsprechenden Leitungsabschnitten und typischerweise einem dazwischen eingegliederten Sekundärwärmetauscher, insbesondere Plattenwärmetauscher, wie er bei Gasthermen und anderen Heizgeräten dieser Art zu Stand der Technik zählt.

Die Erfindung ist nachfolgend anhand von in der Zeichnung dargestellten Ausführungsbeispielen näher erläutert. Es zeigen die
- Figuren 1 - 4: den grundsätzlichen hydraulischen Aufbau eines Heizgeräts mit zwei Heizkreisen mit unterschiedlicher Anordnung von Pumpe und Umschaltventil,
- Figuren 5 - 10: in vereinfachten hydraulischen Schaltbildern die Anordnung von Sensoren in Heizgeräten

Die in den Figuren in vereinfachtem hydraulischen Schaltplan dargestellten Heizgeräte sind Gasthermen, bei welchen ein Primärwärmetauscher 1 vorgesehen ist, in dem ein Wärmeträger, typischerweise Wasser, mittels eines Brenners 2 erwärmt wird, in dem Gas verbrannt wird.

Das Heizgerät hat zwei Heizkreise, nämlich einen Heizkreis 3 für die Raumheizung und einen Heizkreis 4 für die Brauchwassererwärmung. Die Heizkreise 3 und 4 werden mittels eines Umschaltventils 5 mit dem Primärwärmetauscher 1 in einen hydraulischen Kreislauf geschaltet, in dem der Wärmeträger mittels einer Kreiselpumpe 6 umgewälzt wird. Dabei weist der Heizkreis 3 für die Raumheizung ein oder mehrere Sekundärwärmetauscher 7, beispielsweise in Form von Radiatoren auf, die in Reihe und/oder parallel geschaltet sind und jeweils mittels eines Thermostatventils 8 hydraulisch geschaltet sind.

Der Heizkreis 4 für die Brauchwassererwärmung weist einen Sekundärwärmetauscher 9 auf, der beispielsweise als Plattenwärmetauscher ausgebildet ist und dessen eine hydraulische Seite in den Heizkreislauf mit dem Primärwärmetauscher 1 eingliederbar ist und dessen andere hydraulische Seite von dem zu erwärmenden Brauchwasser durchströmt ist.

Im normalen Betrieb fördert die Kreiselpumpe 6 das Wasser durch den Primärwärmetauscher 1, wo es erwärmt wird, und von dort bei geöffnetem Thermostatventil 8 zu einem oder mehreren Sekundärwärmetauschern 7 gelangt, von wo es im Rücklauf wieder zur Umwälzpumpe 6 fließt. Sobald warmes Brauchwasser erzeugt werden soll, wird das Umschaltventil 5 umgesteuert und der Sekundärwärmetauscher 9 in den Kreislauf mit dem Primärwärmetauscher 1 eingegliedert.

Um sicherzustellen, dass im normalen Raumheizbetrieb, in welchem das Umschaltventil 5 den Primärwärmetauscher 1 in einen Kreislauf mit den Sekundärwärmetauschern 7 eingliedert, dass die im Primärwärmetauscher 1 auf den Wärmeträger übertragene Wärme auch abgeführt wird, ohne dass dort eine Überhitzung stattfindet, ist es erforderlich, dass ein oder mehrer Thermostatventile 8 im Heizkreis für die Raumheizung zumindest teilgeöffnet sind, was jedoch z. B. bei starker Sonneneinstrahlung nicht der Fall sein muss. Dann kann es vorkommen, dass der Heizkreis 3 für die Raumheizung unterbrochen ist und der Heizkreis 4 für die Brauchwassererzeugung durch das Umschaltventil 5 ebenfalls unterbrochen ist. Um in dieser Situation ein Überhitzen im Primärwärmetauscher 1 zu vermeiden und sicherzustellen, dass der Wärmeträger abgeführt bzw. im Kreislauf geführt ist, wird der Kreislauf mittels des Umschaltventils 5 geschlossen, indem der Heizkreis 4 für die Brauchwasserbereitung als Bypass geschaltet wird. Hierdurch kann zumindest kurzfristig die erforderliche Wärmeabfuhr gewährleistet werden.

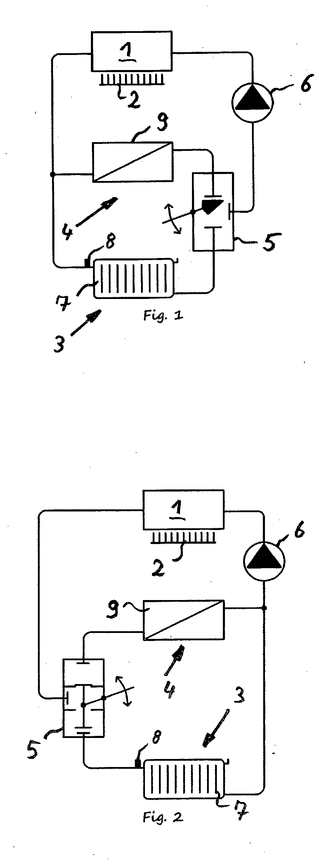

Der grundsätzliche Aufbau eines solchen Heizgerätes ist anhand der Figuren 1 - 4 im Einzelnen dargestellt, wobei bei der Ausführung gemäß Fig. 1 die Umwälzpumpe 6 im Rücklauf der Heizkreise 3, 4 bzw. im Vorlauf des Primärwärmetauschers 1 angeordnet ist. Das Umschaltventil 5 ist dort im Rücklauf der Heizkreise 3, 4 vor der Umwälzpumpe 6 angeordnet. Bei der Ausführung gemäß Fig. 2 befindet sich die Umwälzpumpe 6 im Rücklauf der Heizkreise 3, 4 und im Vorlauf zum Primärwärmetauscher 1, das Umschaltventil 5 hingegen ist im Rücklauf des Primärwärmetauschers 1, also im Vorlauf der Heizkreise 3 und 4 angeordnet.

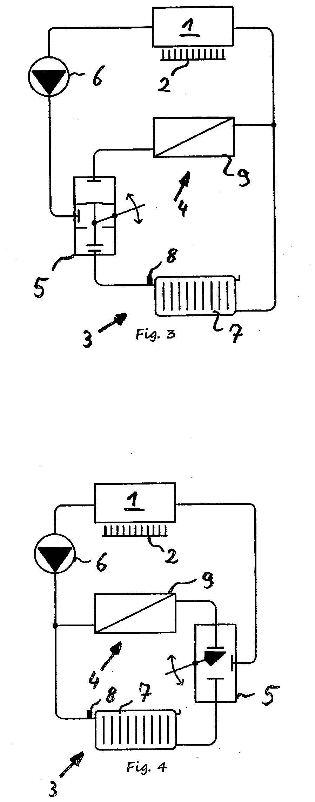

Bei dem Heizgerät gemäß Fig. 3 sind sowohl die Umwälzpumpe 6 als auch das Umschaltventil 5 im Rücklauf des Primärwärmetauschers 1, d. h. im Vorlauf der Heizkreise 3 und 4 angeordnet.

Schließlich zeigt Fig. 4 eine Ausführungsvariante, bei welcher die Umwälzpumpe 6 im Rücklauf des Primärwärmetauschers 1 und im Vorlauf zu den Heizkreisen 3 und 4, das Umschaltventil 5 hingegen im Rücklauf der Heizkreise 3 und 4 und im Vorlauf zum Primärwärmetauscher 1 angeordnet sind.

Allen Ausführungen gemeinsam ist, dass mittels des Umschaltventils 5 der Heizkreis 3 als Bypassleitung verwendet werden kann.

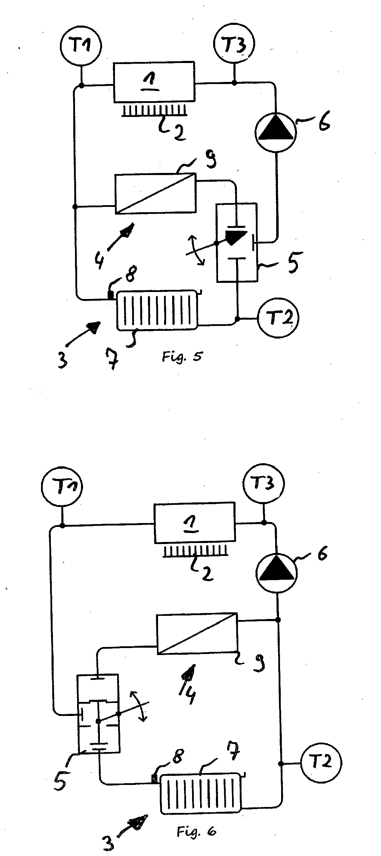

Um die Notwendigkeit einer Bypassfunktion und einer damit einhergehenden entsprechenden Ansteuerung des Umschaltventils 5 zu erfassen, ist eine Sensorik erforderlich. In einfachster Form genügt ein Temperatursensor im Bereich des Primärwärmetauschers, der eine bevorstehende Überhitzung ermittelt. Anhand der Figuren 5 und 6 sind jeweils drei Temperatursensoren T1, T2 und T3 dargestellt, wie sie zweckmäßigerweise anzuordnen sind, um die Notwendigkeit einer Bypassfunktion zu ermitteln. In beiden Ausführungsbeispielen ist ein Temperatursensor T1 in Durchflussrichtung hinter dem Primärwärmetauscher 1 und ein weiterer Temperatursensor 3 in Durchflussrichtung vor dem Primärwärmetauscher 1 angeordnet. Mithilfe dieser beiden Temperatursensoren T1 und T3 kann zuverlässig ermittelt werden, ob ein Durchfluss durch den Primärwärmetauscher 1 in der erforderlichen Menge stattfindet oder nicht, wenn der Brenner 2 eingeschaltet ist. Zweckmäßigerweise wird ein weiterer Temperatursensor T2 im Rücklauf des Heizkreises 3 angeordnet, sodass über die Temperaturdifferenz zwischen T2 und T3 ermittelt werden kann, ob ein Durchfluss stattfindet oder nicht.

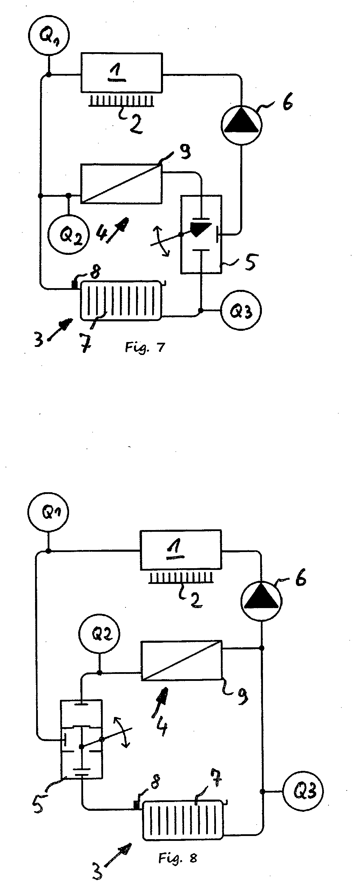

Anhand der Figuren 7 und 8 ist beispielhaft dargestellt, wie mittels Durchflussmessern Q1 - Q3 die Notwendigkeit einer Bypassfunktion sensiert werden kann. Grundsätzlich genügt ein Durchflussmesser Q1, der mit dem Primärwärmetauscher 1 in Reihe geschaltet ist, um zu ermitteln, ob ein Durchfluss durch den Primärwärmetauscher erfolgt oder nicht. Erfolgt dies in der Schaltstellung, in welcher der Heizkreis 3 für die Raumheizung mit dem Primärwärmetauscher 1 kreislaufverbunden ist nicht, dann wird dies durch die Steuerung anhand des Sensorsignals des Sensors Q1 erkennt und die Bypassfunktion aktiviert. Alternativ oder zusätzlich kann dies auch durch den Durchflussmesser Q3 ermittelt werden, der im Rücklauf des Heizkreises 3 angeordnet ist. Schließlich ist vor dem Sekundärwärmetauscher 9 ein Durchflussmesser Q2 angeordnet, welcher den Durchfluss durch den Heizkreis 4 bzw. den Bypass ermittelt. In den Ausführungsbeispielen gemäß den Figuren 7 und 8 ist die Pumpe im Vorlauf zum Primärwärmetauscher 1 dargestellt. Es versteht sich, dass dies in gleicher Weise im Rücklauf angeordnet werden kann.

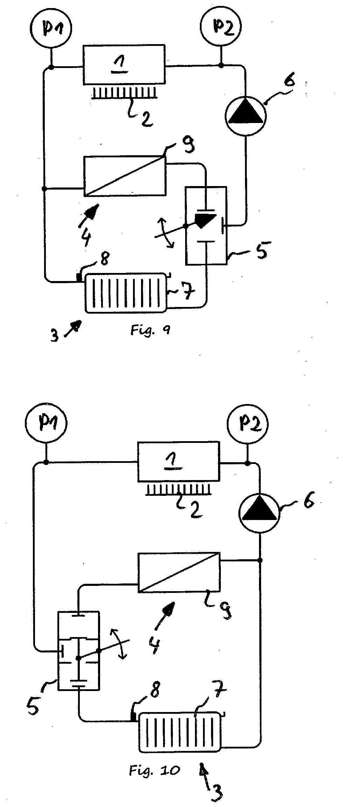

Anhand der Figuren 9 und 10 ist beispielhaft dargestellt, wie mittels Drucksensoren P1 und P2 die Notwendigkeit einer Bypassaktivierung ermittelt werden kann. Der Drucksensor P1 ist in Durchflussrichtung hinter dem Primärwärmetauscher angeordnet, der Druckmesser P2 vor dem Primärwärmetauscher 1 und hinter der Umwälzpumpe 6. Im Bereich der Umwälzpumpe 6 ist eine nicht dargestellte übliche Rücklaufsperre, sodass sich bei zunehmender Erwärmung des Primärwärmetauscher 1 ohne Umwälzung der Wärmeträger ausdehnt und der Druck steigt, was über den Drucksensor P1 und/oder den Drucksensor P2 ermittelt werden kann, worüber dann die Notwendigkeit der Bypassaktivierung ermittelt und der Bypass durch Umschalten des Ventils 5 aktiviert wird. In den Ausführungsbeispielen gemäß den Figuren 9 und 10 ist die Pumpe im Vorlauf zum Primärwärmetauscher 1 dargestellt. Es versteht sich, dass dies in gleicher Weise im Rücklauf angeordnet werden kann.

Zum Umschalten zwischen den Heizkreisen 3 und 4 zählt es zum Stand der Technik ein 3/2-Wegeventil vorzusehen, welches elektromotorisch mittels eines Hebels gesteuert wird, an dessen einem Ende ein Linearmotor 10 angreift und dessen anderes Ende einen Schalt- bzw. Ventilkörper 11 des Umschaltventils 5 bewegt, um eine Leitungsverbindung vom oder zum Primärwärmetauscher 1 von oder zu einem der Heizkreise 3 oder 4 freizugeben bzw. zu sperren.

Wie eingangs dargelegt, kann die Bypassfunktion durch entsprechende Ansteuerung des Umschaltventils 5 bewirkt werden.

Wie die vorstehenden Ausführungen ergeben, spielt es für den erfindungsgemäßen Bypass keinerlei Rolle, ob das Umschaltventil im Vorlauf oder im Rücklauf sitzt, auch ist davon unabhängig, ob die Umwälzpumpe vor oder hinter dem Primärwärmetauscher angeordnet ist.

### Bezugszeichenliste

- 1: Primärwärmetauscher
- 2: Brenner
- 3: Heizkreis für die Raumheizung
- 4: Heizkreis für die Brauchwassererwärmung
- 5: Umschaltventil
- 6: Kreiselpumpe, Umwälzpumpe
- 7: Sekundärwärmetauscher von 3
- 8: Thermostatventil
- 9: Sekundärwärmetauscher von 4

- P1, P2: Drucksensor
- Q1, Q2, Q3: Durchflussmesser
- T1, T2, T3: Temperatursensor

## Patentansprüche

1. Heizungsgerät, insbesondere Gastherme, mit zwei Heizkreisen (3, 4), einen für die Raumheizung und einen für die Brauchwassererwärmung, mit einem Primärwärmetauscher (1) und mit mindestens einem Sekundärwärmetauscher (9) für die Brauchwassererwärmung, mit einer Umwälzpumpe (6) und mit einem Umschaltventil (5), welches den Primärwärmetauscher (1) hydraulisch in den ersten oder den zweiten Heizkreis (3, 4) eingliedert, wobei der Heizkreis (4) für die Brauchwassererwärmung beim Betrieb des Heizkreises (3) für die Raumheizung als Bypassleitung für den Primärwärmetauscher (1) und das Umschaltventil (5) als Bypassventil genutzt wird, und Mittel (T1, P1, Q1) zum Erfassen der Notwendigkeit einer Bypassfunktion vorgesehen und eine Steuerung vorgesehen ist, welche bei Erfassen der Notwendigkeit der Bypassfunktion das Umschaltventil (5) zur Leitungsverbindung mit dem Heizkreis (4) für die Brauchwassererwärmung ansteuert, **dadurch gekennzeichnet, dass** das Umschaltventil (5) im Pumpengehäuse integriert ist und dass die Steuerung für das Umschaltventil (5) im Klemmenkasten des Motors der Umwälzpumpe (6) angeordnet ist.

2. Heizgerät nach Anspruch 1, **dadurch gekennzeichnet, dass** die Mittel (T1, P1, Q1) zum Erfassen der Notwendigkeit einer Bypassfunktion im Bereich des Primärwärmetauschers (1) vorgesehen sind.

3. Heizgerät nach Anspruch 1 oder 2, **dadurch gekennzeichnet, dass** die Mittel zum Erfassen der Notwendigkeit einer Bypassfunktion einen Temperatursensor (T1, T2, T3) aufweisen.

4. Heizgerät nach einem der vorhergehenden Ansprüche, **dadurch gekennzeichnet, dass** die Mittel zum Erfassen der Notwendigkeit einer Bypassfunktion einen Durchflussmesser (Q1, Q2, Q3) aufweisen.

5. Heizgerät nach einem der vorhergehenden Ansprüche, **dadurch gekennzeichnet, dass** die Mittel zum Erfassen der Notwendigkeit einer Bypassfunktion einen Drucksensor (P1, P2) aufweisen.

6. Heizgerät nach einem der vorhergehenden Ansprüche, **dadurch gekennzeichnet, dass** das Umschaltventil (5) zur Betätigung in zwei Moden ausgebildet ist, einem erstem zum schnellen Öffnen und einen zweiten zum langsamen Schließen.

7. Heizgerät nach einem der vorhergehenden Ansprüche, **dadurch gekennzeichnet, dass** das Umschaltventil (5) zur Erzeugung eines Strömungswiderstands modulierend ansteuerbar ist.

8. Heizgerät nach einem der vorhergehenden Ansprüche, **dadurch gekennzeichnet, dass** das Umschaltventil (5) im Vorlauf zu den Heizkreisen (3, 4) angeordnet ist.

9. Heizgerät nach einem der vorhergehenden Ansprüche, **dadurch gekennzeichnet, dass** das Umschaltventil (5) im Rücklauf zu den Heizkreisen (3, 4) angeordnet ist.

## Claims

1. A heating apparatus, in particular gas heater, with two heating circuits (3, 4), one for room heating and one for service water heating, with a primary heat exchanger (1) and with at least one secondary heat exchanger (9) for the service water heating, with a circulation pump (6) and with a switch-over valve (5) which hydraulically integrates the primary heat exchanger (1) into the first or into the second heating circuit (3, 4), wherein the heating circuit (4) for the service water heating, on operation of the heating circuit (3) for room heating, is used as a bypass conduit for the primary heat exchanger (1), and the switch-over valve (5) is used as a bypass valve, and means (T1, P1, Q1) for detecting the necessity of a bypass function are provided and a control is provided, said control on detecting the necessity of the bypass function activating the switch-over valve (5) for the conduit connection to the heating circuit (4) for service water heating, **characterised in that** the switch-over valve (5) is integrated into the pump casing and that the control for the switch-over valve (5) is arranged in the terminal box of the motor of the circulation pump (6).

2. A heating apparatus according to claim 1, **characterised in that** the means (T1, P1, Q1) for detecting the necessity of a bypass function are provided in the region of the primary heat exchanger (1).

3. A heating apparatus according to claim 1 or 2, **characterised in that** the means for detecting the necessity of a bypass function comprise a temperature sensor (T1, T2, T3).

4. A heating apparatus according to one of the preceding claims, **characterised in that** the means for detecting the necessity of bypass function comprise a flow meter (Q1, Q2, Q3).

5. A heating apparatus according to one of the preceding claims, **characterised in that** the means for detecting the necessity of a bypass function comprise a pressure sensor (P1, P2).

6. A heating apparatus according to one of the preceding claims, **characterised in that** the switch-over valve (5) is designed for actuation in two modes, in a first one for the rapid opening and a second one for the slow closure.

7. A heating apparatus according to one of the preceding claims, **characterised in that** the switch-over valve (5) is activatable in a modulating manner for producing a flow resistance.

8. A heating apparatus according to one of the preceding claims, **characterised in that** the switch-over valve (5) is arranged in the feed to the heating circuits (3, 4).

9. A heating apparatus according to one of the preceding claims, **characterised in that** the switch-over valve (5) is arranged in the return to the heating circuits (3, 4).

## Revendications

1. Appareil de chauffage, notamment chaudière à gaz, avec deux circuits de chauffage (3, 4), l'un pour le chauffage de pièces et l'autre pour le chauffage d'eau sanitaire, avec un échangeur de chaleur primaire (1) et avec au moins un échangeur de chaleur secondaire (9) pour le chauffage de l'eau sanitaire, avec une pompe de recirculation (6) et avec une vanne de commutation (5) qui intègre l'échangeur de chaleur primaire (1) hydrauliquement dans le premier ou dans le second circuit de chauffage (3, 4), le circuit de chauffage (4) pour le chauffage de l'eau sanitaire étant utilisé, lors d'un fonctionnement du circuit de chauffage (3) pour le chauffage de pièces, comme conduit de dérivation pour l'échangeur de chaleur primaire (1) et la vanne de commutation (5) étant utilisée comme vanne de dérivation, et des moyens (T1, P1, Q1) pour détecter un besoin d'une fonction de dérivation étant prévus et une commande étant prévue qui, en cas de détection du besoin de la fonction de dérivation, commande la vanne de commutation (5) pour une connexion au circuit de chauffage (4) pour le chauffage de l'eau sanitaire, **caractérisé en ce que** la vanne de commutation (5) est intégrée dans le carter de pompe et **en ce que** la commande pour la vanne de commutation (5) est disposée dans le boîtier de connexion du moteur de la pompe de recirculation (6).

2. Appareil de chauffage selon la revendication 1, **caractérisé en ce que** les moyens (T1, P1, Q1) pour détecter un besoin d'une fonction de dérivation sont prévus aux alentours de l'échangeur de chaleur primaire (1).

3. Appareil de chauffage selon la revendication 1 ou 2, **caractérisé en ce que** les moyens pour détecter un besoin d'une fonction de dérivation comprennent un capteur de température (T1, T2, T3).

4. Appareil de chauffage selon l'une des revendications précédentes, **caractérisé en ce que** les moyens pour détecter un besoin d'une fonction de dérivation comprennent un capteur de débit (Q1, Q2, Q3).

5. Appareil de chauffage selon l'une des revendications précédentes, **caractérisé en ce que** les moyens pour détecter un besoin d'une fonction de dérivation comprennent un capteur de pression (P1, P2).

6. Appareil de chauffage selon l'une des revendications précédentes, **caractérisé en ce que** la vanne de commutation (5) est conformée pour un actionnement selon deux modes, un premier pour une ouverture rapide et un second pour une fermeture lente.

7. Appareil de chauffage selon l'une des revendications précédentes, **caractérisé en ce que** la vanne de commutation (5) est conçue pour être commandée de manière modulante pour engendrer une résistance de flux.

8. Appareil de chauffage selon l'une des revendications précédentes, **caractérisé en ce que** la vanne de commutation (5) est disposée dans le départ vers les circuits de chauffage (3, 4).

9. Appareil de chauffage selon l'une des revendications précédentes, **caractérisé en ce que** la vanne de commutation (5) est disposée dans le retour des circuits de chauffage (3, 4).
